# EUROPEAN PATENT SPECIFICATION

(11) **EP 1 531 404 B1**
(45) Date of publication and mention of the grant of the patent: **28.09.2011**
(21) Application number: 04026451.7
(22) Date of filing: 08.11.2004
(51) Int. Cl.: G06F 17/30

(54) **Presentation of media files in a diary application**
Präsentation von Mediadateien in einer Tagebuchsanwendung
Présentation de fichiers de média dans une application d'agenda

(30) Priority: 17.11.2003 US 715161
(43) Date of publication of application: 18.05.2005
(73) Proprietor: Nokia Corporation, 02150 Espoo (FI)
(72) Inventor: Schybergson, Olof, London N5 1PL (GB); Curtis, Mark, London SE24 9LY (GB); Lindholm, Christian, 00150 Helsinki (FI)
(74) Representative: Becker Kurig Straus

(56) References cited:
- WO-A-02/057959
- US-A- 5 898 431
- US-A1- 2003 009 493

## Description

### FIELD OF THE INVENTION

The present invention relates to electronic storage of media files and, more specifically, to a media diary application that provides for a topographic presentation of quantity of media items in relation to a specified time span.

### BACKGROUND OF THE INVENTION

The rapid growth of digital communication has made it possible for all kinds of digital media items to be communicated amongst various types of wireless and wire line communication devices. For instance, the cellular or mobile telephone is no longer limited to telephonic voice communication and may include other means of digital communication, such as digital networking (i.e., Internet communication, text messaging, and the like). In addition, an increasing number of cellular telephones and other mobile wireless communication devices, such as portable computers, personal data assistants (PDAs) and the like, are being integrated with other means of capturing or producing digital media, such as digital cameras, digital audio recorders, digital video recorders and the like. Technological advances have made it possible for other digital devices, such as digital cameras, digital video recorders, digital audio devices and the like to be equipped with means for digital communication. As more and more digital devices possess the capability to digitally communicate with one another, the amount of digital media items that will be communicated amongst these devices will increase at an alarming rate.

In addition to the onset of more and more digital devices possessing digital communication capabilities, the digital storage capacity of these devices is constantly increasing. In the near future the majority of mobile digital communication terminals may well be equipped with storage capacity in the gigabyte range or greater, allowing these devices to store an enormous amount of digital data. In this environment it will no longer be prohibitive from a memory capacity standpoint to store a voluminous amount of large file types, such as video, audio or other multimedia files.

In the digital communication environment where more and more digital devices, both wireless and wired, are equipped with a means for digital communication and where the storage capacity of these devices has become seemingly endless, the digital communication device will encounter and store innumerable digital media files. As such, the digital communication device will desire a means to access, store, manage and further communicate these digital files in an efficient and user-friendly environment.

For example, if a digital communication device receives a digital media file the user of the device would benefit greatly from an application that automatically places the file into a readily accessible storage area and where managing and accessing of the file in the future can occur efficiently, without the user having to spend a great deal of time searching for the media file.

Most digital communication devices, such as desktop or laptop computers, personal data assistants (PDAs) or the like either come equipped or can be configured by the user to implement a daily planner application. The daily planner allows the user coordinate and manage their upcoming schedule of events by inputting event reminders in a digital calendar. The digital planner provides the unique benefit of sending the user electronic reminders, in the form of alarms or visual or audible messages, when an upcoming event is pending. The digital planner has proven to be a highly successful tool for the businessperson and, in most instances, has replaced the need for conventional hard copy or paper daily planners.

Most digital media files can be easily categorized and stored according to a calendar date. For example, a wedding video can be categorized according to the date of the wedding and photographs taken at a party can be categorized according to the date of the party. These are examples of categorizing the media file based on the creation date of the media file. In other instances the media file can be associated with the date on which the media file is used or presented or the date on which the recipient receives the file. For example, a multimedia presentation for a business meeting may be categorized according to the date of the presentation and a personal text file from a friend may be categorized according to the date received.

Over time, digital devices with large memory capacity possess the capability to acquire and store an enormous volume of media files. This is especially true as we enter a burgeoning digital communication era where more and more digital devices will possess the capability to communicate digitally. For example, in a future where more and multi-function digital devices are prevalent, such as mobile telephones with digital cameras and conventional digital cameras, digital video recorders and the like have the capability to communicate digitally, the devices will be inundated with digital media files. The user of these devices, and all other digital devices capable of media storage, will desire an application that stores and manages the digital media files. A key attribute for such an application is user efficiency; because the user must be able to efficiently locate media files. This task becomes more complicated as the digital device acquires more and more media files.

An additional concern of handheld digital communication devices is that the display of such devices is typically minimal in size and applications that are implemented on the display must be able to be condensed and presented in a format that provides the user with accessibility to the functions of the application. It is typically easier and more efficient for the user of a handheld touch-screen display to search via a touch function, such as scrolling or the like, as opposed to searching via keystroke entry of text. Therefore, any application that manages digital media files on a handheld digital communication device must accommodate the typically small display of such devices and provide for an efficient means of locating the digital files with the management application.

Therefore, the need exists to develop a media file storage and management application for a digital device that will provide for the storage of a large volume of media files and user efficiency in terms of being able to quickly locate a specific media file. The media file storage and management application should be capable associating and organizing the media files according to a period of time, such as a day, week or the like. As such, the media management application should provide the user with a system for easily navigating through the time periods in order to efficiently locate a media file.

### BRIEF SUMMARY OF THE INVENTION

The present invention provides for a media diary application implemented in an electronic device, such as a digital communication device. The media diary application provides for a topographic presentation or view of the quantity of media files associated with specific time periods. In addition, the topographic view provides the capability to distinguish between different media files based on a chosen media file characteristic. Typically, the chosen characteristic will be media file type, such as image file, video file, audio file, text file, and the like. In addition, other media file characteristics may be graphically distinguished in the topographic view. The chosen characteristic may be dictated by the configuration of the dairy application or the chosen characteristic may be defined by the user of the diary. In the topographic presentation the quantity of media files are represented graphically, typically in a line graph or bar graph type presentation. The quantity of media files may be defined by the number of media files or the storage volume of media files. As such, the topographic view of the media diary application provides the user of the diary an efficient means of locating media files and assessing quantity of media files in relation to time span.

In a first embodiment of the invention an application for providing access to media files on a digital device is defined. The application includes a computer readable storage medium having computer-readable program instructions embodied in the medium. The computer-readable program instructions will include first instructions for generating a media view that segments time into time units and second instructions for generating a topographic view that graphically represents media file quantity in relation to the time units presented in the media view. The media view will define periods of time and time units based on either configuration of the media diary or user selection. The time periods and time units may be chosen from any period or unit, such as a year, month, week, date, hour, minute or the like. The period of time and time units will typically be optimized based on the quantity of media files that will be graphically displayed in the associated topographic media view.

The topographic view will typically graphically distinguish between media files based on a chosen media file characteristic. The chosen media file characteristic may be determined by media diary configuration or the chosen media file characteristic may be specified by the diary user. In one preferred embodiment the chosen media file characteristic will be media file type, such as image file, video file, audio file, text file and the like. Additionally, other media file characteristics such as media file size, event related to the media file, media file author, media file title, media file keyword may also be used as the graphically distinguishing characteristic within the topographic view.

The topographic view may further include a baseline representation for dividing the graphical representations into more than one portion of the topographic view. Typically, the baseline representation will be a dividing line that divides the topographic view into two portions, such as an upper portion and a lower portion. The baseline representation provides for the ability to divide the graphical representations provided in the topographic view based on a chosen distinguishing media file characteristic. For example, media files of one type, such as audio visual files, may be graphically represented on the upper portion of the view and media files of another type, such as text files, may be graphically represented on the lower portion of the view.

The topographical view may further include a zoom mechanism that provides for a detailed graphical representation of media files. The zoom mechanism will allow the user to view a more detailed topographic representation of media files. For example, in a standard topographic view the media files may be represented by a line graph and in the zoomed-in detailed view the media files may be represented individually by icons in a bar graph format. Typically, the more detailed view will present a shorter time span and shorter time units within the time span. Additionally, the detailed view will provide for the media file representations to be more clearly delineated and in more detail than the standard view. The zoom mechanism may also provide for the media files to be accessed through detailed graphical representation of the media files.

The topographic view may further include a focus mechanism that provides for the graphical representation of media files to be previewed and/or accessed by cursor movement in a vicinity of the graphical representation. By way of example, as a cursor is moved over a line graph representation of media files, the focus mechanism will display detail related to the media file associated with that portion of the line graph and will allow the user to access the media file via activation of the displayed detail.

The topographic view may further include geometric identifiers, in the form of lenses, for identifying areas within the view that include media files that are responsive to a search conducted by the user. The media diary of the present invention will have a searchable database of metadata information related to each individual media file. A user may perform a keyword search or a filtering-type search to locate media files of interest. The topographic view may display the results of such search by presenting a lens over the area of the view in which the searched file or files reside. The lens may be altered in format to identify different search results or to signify the amount of searched files in the identifying area.

The topographic view may further include a highlighting function that provides for the highlighting of time periods within the topographic view to identify areas of user interest. For example, if the user of the diary wishes to identify a time span related to a specific event in the user's life, the user may highlight the time span to accentuate the area and make it easier for the user to locate the time span when browsing in the topographic view mode.

A further embodiment of the invention is defined by a digital device having a processing unit that executes computer-readable program instructions for accessing media files. The computer-readable program instructions include first instructions for, generating a media view that segments time into time units and second instructions for generating a topographic view that graphically represents media file quantity in relation to the time units presented in the media view. Additionally, the digital device will include a display in communication with the processing unit that presents the user access to media files through the time bar and a topographic view.

The invention is further defined by a method for providing a topographic view in a media diary application the method includes the step of defining a time span and time units within the time span, determining the quantity of media files in the media diary application that are associated with the defined time units and providing a topographic view that graphically represents the quantity of media files in the media diary application that are associated with the time units in the time bar. The method may additionally include the step of defining a media file characteristic, determining the quantity of media files that include the media file characteristic, determining the quantity of media files having the characteristic that are associated with the defined time units and providing a topographic view in conjunction with the time bar display. The topographic view graphically represents the quantity of media files, by media file characteristic that are associated with the time units in the time bar.

In yet another embodiment, the invention is defined by a method for providing a zoom function in a topographic view of a media diary. The method includes the steps of selecting a portion of a graphical representation in a first topographic view, optionally selecting a scale for zooming, activating the selected portion of the graphical representation and displaying a detailed second topographical view that represents the selected portion of the graphical representation of the first topographical view. The method may further entail the step of providing detailed representations of the media files associated with the selected portion of the first topographic view and activating the detailed representations of the media files to access the media files.

As such, the media diary application of the present invention provides for a topographic presentation or view of the quantity of media files associated with specific time periods. In addition, the topographic view provides the capability to distinguish between different media files based on chosen media file characteristic. In the topographic presentation the quantity of media files are represented graphically, typically in a line graph or bar graph type presentation. As such, the topographic view of the media diary application provides the user of the diary an efficient means of locating media files and assessing quantity of media files in relation to time span.

### BRIEF DESCRIPTION OF THE DRAWINGS

Having thus described the invention in general terms, reference will now be made to the accompanying drawings, which are not necessarily drawn to scale, and wherein:
Figure 1 is an illustration of a media view or media window as displayed by a media diary.
Figure 2 is an illustration of a topographic view in a media diary in conjunction with a six-month time bar, in accordance with an embodiment of the present invention.
Figure 3 is an illustration of a topographic view in a media diary in conjunction with a month long time bar, in accordance with an embodiment of the present invention.
Figure 4 is an illustration of a topographic view including a day line, in accordance with an embodiment of the present invention.
Figure 5 is an illustration of a topographic view in a media diary incorporating a zoom mechanism, in accordance with an embodiment of the present invention.
Figure 6 is an illustration of a topographic view in a media diary incorporating lenses for identifying areas where search results reside, in accordance with an embodiment of the present invention.
Figure 7 is a block diagram of a digital device implementing a media diary that incorporates a topographic view, in accordance with an embodiment of the present invention.
Figure 8 is a flow diagram of a method for representing media files in a topographic view of a media diary application, in accordance with an embodiment of the present invention.
Figure 9 is a flow diagram of a method for performing a zoom function in a topographic view of a media diary application, in accordance with an embodiment of the present invention.
Figure 10 is a flow diagram of a method for performing a search within a topographic view of a media diary application, in accordance with an embodiment of the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

The present invention provides for a media diary application implemented in an electronic device, such as a digital communication device. The media diary application provides for a topographic presentation or view of the quantity of media files associated with specific time periods. In addition, the topographic view provides the capability to distinguish between different media files based on a chosen media file characteristic. Typically, the chosen characteristic will be media file type, such as image file, video file, audio file, text file, and the like. In addition, other media file characteristics may be graphically distinguished in the topographic view. In the topographic presentation the quantity of media files is represented graphically, typically in a line graph, envelope curve, stacked area or bar graph type presentation. The number quantity of media files may be defined by the number of media files or the storage volume of media files. As such, the topographic view of the media diary application provides the user of the diary an efficient means of locating media files and assessing quantity of media files in relation to time span.

The topographic view will be adaptable, such that, the user may configure the topographic view as the application dictates. For example, the user will be able to define the time span, such as a year, month, week, etc., that the topographic view will encompass. Additionally, the user will be able to define the type of media files that will be presented in the topographic view and the manner in which the media files are presented in the topographic view.

Additionally, the topographic view will provide the user with tools to efficiently assess and/or access files within the media diary. The graphical representation of media files will provide focus and zoom functions for the purpose of isolating a media file within a graph or providing access to a view of a portion of a time span, e.g., zooming from a year time span to a month time span or zooming from a month time span to a week time span. The focus function may allow for a cursor to be positioned over a segment or an area of the topographic view to display more detailed representations of the media files associated with that portion of the topographic view. Once a media diary user has zoomed-in or focused-in to a desired media file, the user may be able to access the media file by mouse-type activation or predefined keystroke.

The topographic view: provides the media diary user the ability to isolate regions within the time span of the view, in which, desired media files exist. In this regard, the media diary application will provide for media files to be searched based on the unique metadata information that is connected to each media file in the diary. These searches may be in the form of keyword searches from the metadata database or filtering the media file database by a file characteristic, such as media type, file size or the like. In the topographic view the results of these searches: are presented as geometric icons displayed over an area of the topographic view, herein referred to as a lens or any other means of graphically illustrating the search results within the topographic view may be implemented. The size and shape of the lens or any other geometric identifier that illustrates the search results may vary.

The media diary application of the present invention may be implemented and executed on any electronic device that incorporates a display, such as a desktop or portable computer, cellular telephone, personal data assistant (PDA), digital camera, digital camcorder, e-book device, television, digital audio player or the like. In addition the media diary application may be implemented on electronic devices that are connected to an external display, such as a set-top box (STB), personal video recorder (PVR), digital video recorder (DVR) or the like. While in most implementations the digital device that executes the media diary application will be capable of any type of wireless or wireline network communication, such as wireless telecom, short range radio network, Bluetooth®, Wireless Local Area Network (WLAN), Radio Frequency Identification (RFID), Internet Protocol Data Casting (IPDC), Digital Video Broadcasting (DVB), Infrared Data Association (IrDa), Internet or the like, it is not required that the digital device be adapted to communicate via network. Devices that are capable of requiring digital media files internally or may access media files through memory devices (e.g., flash storage device, memory sticks, video and audio storage tapes, CD, DVD, removable hard disc device (HDD) and the like) are also applicable.

In accordance with an embodiment of the present invention, the media diary application will be embodied by a computer-readable storage medium having computer-readable program instructions stored in the medium. The storage medium will typically be a memory device, such as flash ROM memory, HDD or the like. The programming instructions may be written in a standard computer programming language, such as C++, Java or the like. Upon execution by a processing unit as described below, the program instructions will implement the various functions of the media diary application as described below. The computer-readable program instructions include first instructions that will generate a time bar that is presented in a media diary view and segments periods of time into time units. The computer-readable program instructions also includes second instructions that will generate a topographic view that will graphically represent the quantity of media files in relation to the time units. The topographic view may also graphically distinguish between media files of a chosen characteristic, such as media file type, media file size, related media file event and the like. While the first and second instructions may be modules, objects or the like that communicate with one another, the first, second and third instructions need not be discrete or separable portions of the program instructions and may be interspersed throughout if so desired.

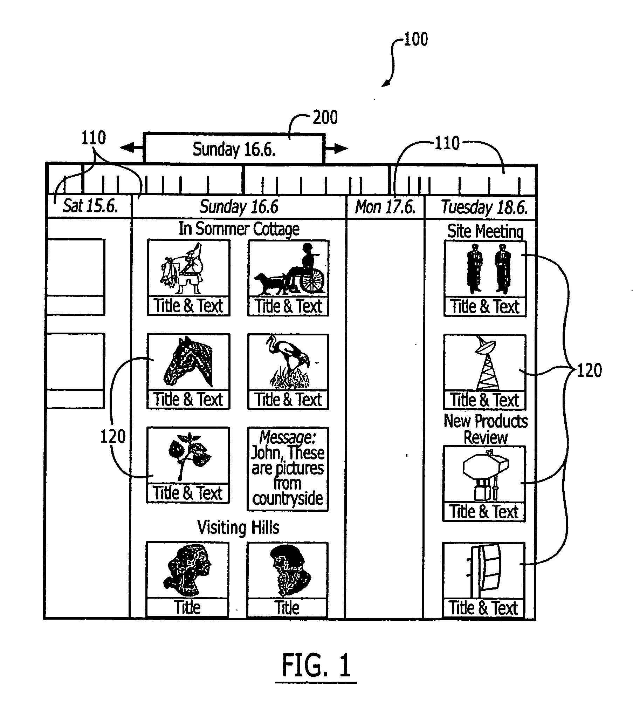

Figure 1 illustrates an example of a standard media view 100 of a media diary application. The standard media view of the media diary is explained herein as a precursor to the detailed explanation of the topographic view of the present invention. The media view provides for digital media files, such as digital images, digital video, digital audio, computer games, computer software, digital text files or the like, to be accessible to the media diary user. Typically the media files that are represented in the media view will be associated with a past calendar event or past reminder. Alternatively, the media files that are represented in the media view may be associated with a moment or period of time based on a timestamp in the media file, without having noted an event related to the media file, in advance, in the calendar view or application. It is noted that the media view herein depicted and described is by way of example only; other media views that provide for the display of media file representations in association with a moment of time or a time period are also contemplated.

The media view of the illustrated embodiment includes time period columns 110, which correspond to a specific time period, in this instance a specific date. In the example shown, four date columns are visible within the view corresponding to the four previous dates. In an alternate embodiment the media view may include time period columns 110, which may correspond to any period of time, such as a year, a month, a week, a day, an hour or the like. Additionally, the time period columns may be associated with an event, such as an industry convention, a holiday or like. The time period columns will include media file representations 120 that are associated with the time period or event of the column. For example, the media file representations may include representations that provide the user with access to digital files, such as video files, image files, audio files, text files, emails, short message service (SMS) messages, multimedia message service (MMS) messages and the like and provide the user with information pertaining to the content of the files. The media file representations may include an icon, or a thumbnail image, a portion of the text of a text document or message or any other suitable media file representation with or without a title of the media file.

Typically, the media diary will receive the media file from a digital recording function associated with the device or via digital communication from other devices. For example:
1) If the digital device is a cellular telephone that incorporates a digital camera or any other digital device that serves as a digital recording device, a digital media file (i.e., image) may be communicated directly via cellular telephone access from the camera/telephone device to the media diary in another device.
2) If the digital device is an independent digital camera or any other digital recording/storing/playing device and equipped with a wireless or wireline network connection the digital media file may be communicated directly from networked device to a media diary in another device.
3) If the digital device is an independent digital camera or any other digital recording/storing/playing device and equipped with short range digital communication means the digital media file may communicated first to a long range digital communication device (i.e. cellular telephone, a PDA, laptop or the like) that then passes the files to another device with a media diary. Alternatively, in proximity, a file transfer may occur directly to another device with a media diary.
4) The media files may be communicated by a physical memory unit / device transferred from one device to another device.

As such, the digital recording/storing/playing device from which the media file is communicated (i.e., the passing device) may include, and implement, the media diary application or may not include the media diary application. If the passing device includes the media diary application, the media files may be processed for media diary purposes including the generation of associated metadata prior to communication to other devices.

The communication /synchronization of the media files may be automatic after a creation of a new media file, or after a certain amount of media files have been created. Alternatively, the communication may occur at a selected time or on a request of a user and may include a single media file or a group of media files. The communication/synchronization may occur via any wireless or wireline network communication method, such as for example via SMS, MMS or file transfer. The communication, i.e. synchronization, may also occur from a back end media diary application/device to any digital recording / storing / playing device with or without the media diary application.

The media file will typically have associated metadata, in the form of a timestamp, event name, file name, location information, people in the event or in the media file, objects in the media file, file type, file size or the like. The media file metadata may be automatically inputted by the digital recording device at the time of the creation of the media file or may be manually inputted, such as at the time of creation of the media file.

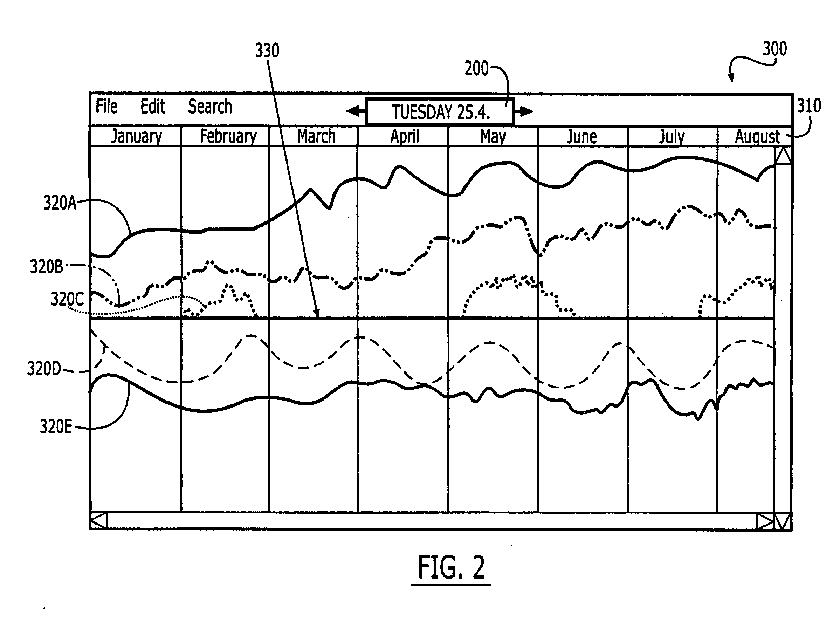

In addition, it is possible for the metadata to previously exist in conjunction with a calendar event in a calendar application of the media diary or in an auxiliary calendar application / personal planner application. Once the media diary receives the media file, the media file metadata is combined and/or correlated with the calendar event metadata information. The combined and/or correlated metadata information is associated and stored with the media file in the media diary, such that, when a user accesses the media file via the media file representation in the media view the user will be presented with the combined metadata and calendar event information. See for example, media file representations **120** of Figure 2, in which, a thumbnail image is combined with a title and text entry.

Additionally, the Figure 1 media view incorporates a time handle **200.** The time handle allows the media view to be scrolled forward in time and backward in time. The time handle is depicted in a stationary position, typically the centerline position. If the time handle is moved from the stationary position to the left, the media view will scroll to the right, such that, more past dates in the media view will be scrolled and displayed. If the time handle is moved from the stationary position to the right, the media view will scroll to the left, such that, more future dates in the media view will be scrolled and displayed. The stationary position is usually in the centerline of the media diary display, or in the centerline of the time bar, or, alternatively, in the centerline of the media view.

Figures 2 - 4 provide illustrations of exemplary topographic view of a media diary application, in accordance with an embodiment of the present invention. Figure 2 illustrates a topographic view **300** in which the time span is depicted in terms of months. The media view of the Figure 2 embodiment identifies units of time **310**, as months, herein depicted; the months of January through August are visible in the view. The user of the media diary will be able to configure the topographic view with the desired units of time visible in the media view. For the example, if the user desires to observe information related to the quantity of media files over a long time span, the media view may define units of time as years, decades or centuries, etc. If, however, the user desires to observe information related to the quantity of the media files over a short time span, the media view may define units of time as weeks, days, hours or minutes, etc. The width of the time units in the media view may be fixed to be the same or it may vary from one unit of time to another.

The time handle **200**, which is depicted in a stationary position and highlights a centerline date of Tuesday 25 April, may be moved to the right or the left to scroll the media view and the associated topographic view. In the depicted embodiment, if the time handle is moved to the right, the time bar and topographic view will move to the left, exposing months following August and the media files associated with those months. If the time handle is moved to the left, the time bar and topographic view will move to the right, exposing months preceding January and the media files associated with those months.

The topographic view of Figure 2 incorporates line graphs **320** that indicate the quantity of media files having a specific media file characteristic in relation to the time period. Each of the unique line graphs is associated with a specific media file characteristic, such as media file type, media file size or any other distinguishing file characteristic that is stored in the associated metadata file. The user of the media diary will be able to configure the topographic view, such that only media files of interest to the user are displayed in the view. As such, the user can dictate the amount of line graphs that are displayed in the view, as well as, the media file characteristic that is being analyzed by the view. For example, the bold-faced solid line **320A** may graphically represent the quantity of image files, the sequentially dotted line **320B** may graphically represent the quantity of video files, the bold-faced dotted line **320C** may graphically represent the quantity of audio files and so forth.

The topographic view of Figure 2 is also provided with an optional baseline **330** that provides a frame of reference to divide the topographic view into two portions. In this regard the baseline may delineate between certain file types. For instance, in the example above the lines above the baseline, lines **320A** - **320C** are associated with audio visual media files, the lines below the baseline may be associated with text files. For example dotted line **320D** may graphically represent the quantity of text message files and solid line **320E** may graphically represent the quantity of spreadsheet files. In addition to delineating between file types, the baseline serves to insure the line graphs that are presented in the view are easily distinguishable from one another. Being able to easily distinguish between line graphs is essential to zoom and focus functions.

While the Figure 2 depiction uses line graphs to illustrate the quantity of media files associated with a time period, it is also possible for the topographic view to illustrate the quantity of media files in other graphical formats. For instance, bar graphs may be provided, in which the bar graph includes preview images, thumbnail images or other graphical indicators of the content of the media file. It is also possible to implement envelope curves, stacked area presentations or any other graphical depictions to indicate the quantity of media files associated with a period of time. In addition, the areas separated by lines may be visually identifiable by coloring, shading or any other form of visual identifier.

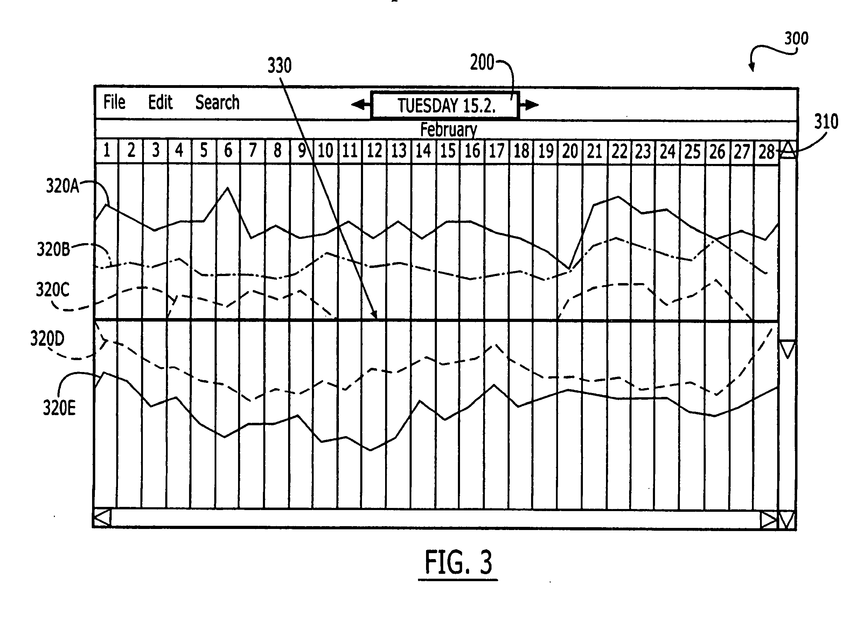

Figure 3 illustrates an alternate example of a topographic view **300**, in which the time span of the view is depicted in terms of days. The time bar **310** of the Figure 3 embodiment identifies units of time, as days, herein depicted; the days in the month of February are visible in the view. As previously discussed, the user of the media diary is typically provided the capability to configure the topographic view with the desired units of time visible in the time bar. The topographic view of Figure 3 incorporates line graphs **320A** - **320E** that indicate the quantity of media files for a specific media file characteristic, such as media file type, in relation to the time period. The depicted view also illustrates an optional baseline 330 that provides a frame of reference to divide the topographic view into two portions.

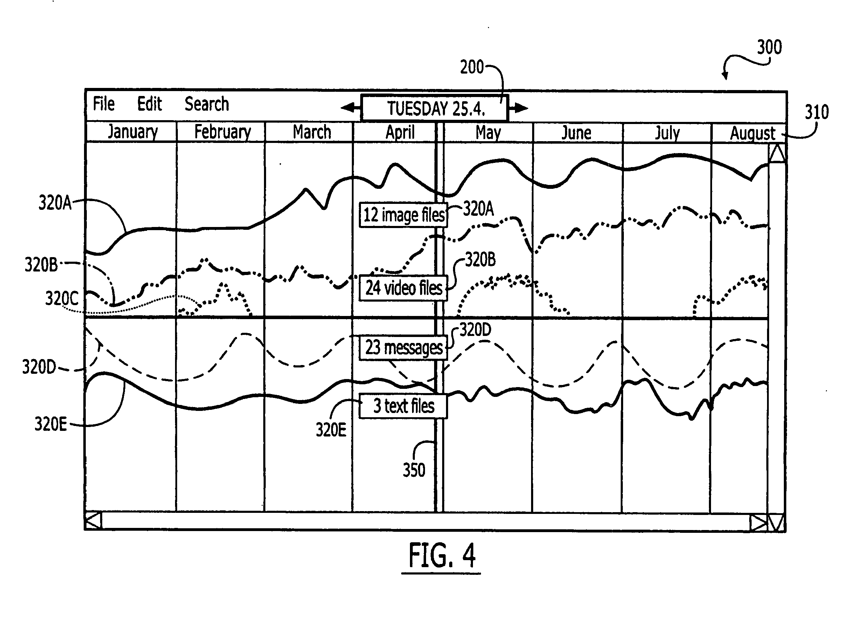

Figure 4 illustrates an example of a topographic view **300**, incorporating a day line **350**. The day line indicates the centerline position of the time handle **200** and indicates the day/time that is displayed in the time handle. In addition, the day line may indicate the number of media files having the media file characteristic of interest for that particular day. For example, in the illustrated embodiment, file type displays **360A, 360B, 360D, 360E** indicate the number of media files according to type. File type display **360A** indicates 12 image files, corresponding to the solid line graph **320A**, file type display **360B**, indicates 24 video files, corresponding to broken line graph **320B**, file type display **360D** indicates 23 message files, corresponding to the broken line graph **320D**, and file type display **360E**, indicates 3 text files, corresponding to solid line graph **320E**.

The Figure 2 - 4 embodiments may provide for a zoom mechanism, typically implemented by having a cursor moved across the topographic view, such that when the cursor encounters a line graph, the media files that are associated with the underlying line graph are displayed, typically via a separate pop-up window. From the pop-up window display of media files, the user may be provided with access to a specific media file by activating the icon that represents the media file; typically activation will involve a mouse-type input or a keystroke on an associated keypad.

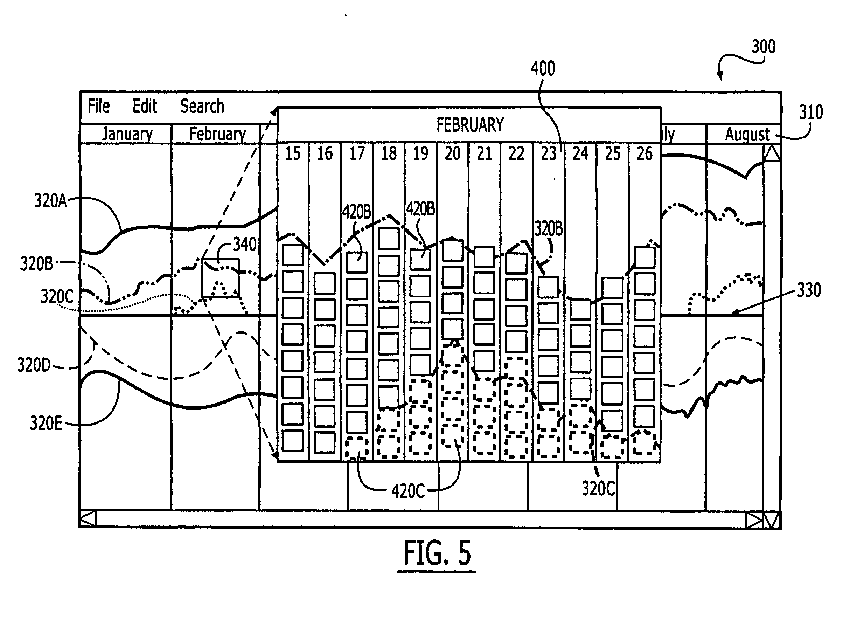

Figure 5 illustrates a topographic view, in which a user has zoomed-in a specific portion of the view to display a more detailed topographic view of a specific time period and media file type, in accordance with an embodiment of the present invention. The Figure 5 embodiment illustrates the same general topographic view that is displayed in Figure 2. The time bar **310** defines units of time as months, herein depicted, the time spans from the month of February to the month of August. The topographic view of Figure 4 additionally incorporates line graphs **320A** - **320E** that indicate the quantity of media files for a specific media file characteristic, such as media file type, in relation to the time period. The depicted view also illustrates an optional baseline **330** that provides a frame of reference to divide the topographic view into two portions.

In the Figure 5 embodiment the user of the topographic view has activated a zoom function to pull-up a more detailed topographic view **400** of an area of interest **340**. As depicted the area of interest includes line graphs **320B** and **320C** for a time span in the month of February. The zoom function for the area of interest may be implemented by passing a cursor over the chosen area and activating the area of interest, typically by a mouse-type input or a keystroke. Activating the area of interest will cause the detailed topographic view **400** to appear in a separate window display.

In the detailed topographic view **400** a time bar **410** defines a time span in terms of units of days, in this instance a twelve-day time span between 15 February and 26 February. The detailed topographic view displays the media files associated with the area of interest **340.** In the detailed topographic view the media files are represented by icons **420**. The icons may include a preview of the content of the media file, such as a thumbnail image of a portion of the media file, or the icon may include any other characteristic representation of the media file. As such, in this instance, the detailed topographic view provides for the exact number of media files in the area of interest and an icon for each of the media files. In the depicted embodiment the solid lined icons **420B** represent the same media file type that is represented by line graph **320B** and the dotted line icons **420C** represent the same media file type that is represented by line graph **320C**. By way of example, the line graphs **320 B** and **320 C** are also illustrated in the detailed topographic view in blown-up, zoomed-in detail.

The icons **420** of the detailed topographic view **400** will provide the user of the media diary application access to the content of the media file. Typically, the user will activate the media file by mouse-type input or keystroke to display the media file in its entirety.

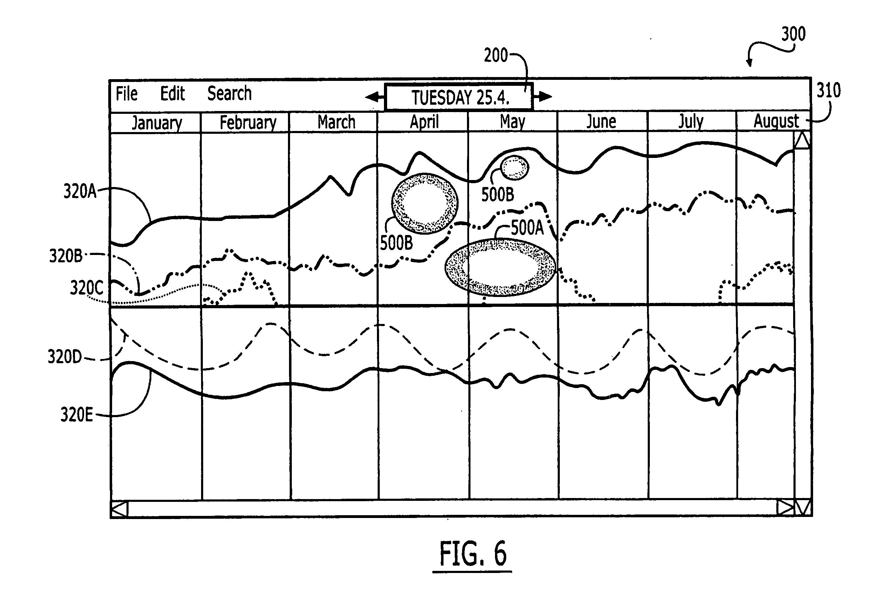

Figure 6 provides an illustration of a topographic view incorporating geometric identifiers **500**, referred to herein as lens, that designate areas with the view that include media files that include the results of a search, in accordance with an embodiment of the present invention. The media files of the media diary will have metadata information associated with the file. The information is typically created automatically or manually at time the media file is created. In addition, metadata information may be correlated or imported from calendar event information when the media file is received by the media diary application. As previously discussed the media diary application may implement a calendar application or the calendar application may be an auxiliary application that is associated with the media diary application. The metadata information that is associated with the media files is searchable data that a user may search via conventional key word searching techniques, Boolean operators, filtering of metadata information characteristics or through visual scrolling means.

In the depicted embodiment of Figure 6 lenses **500** are illustrated that are geometric identifiers of areas in which searched media files can be located. Thus, a lens will appear when a user conducts a metadata search for a specific file or specific file types. The lens will typically remain active, to illustrate the search results, until the user designates the lens for removal. Different lens types may indicate results of different searches. For example, in the illustrated embodiment the oval dark-shaded lens **500A** indicates results of a first search and the circular light-shaded lenses **500B** indicate results of a second search. The size of the lens will typically indicate the amount of media files in the lens area that meet the search criteria. In addition the shading of the lenses or the geometric shape of the lenses may indicate the quantity of media files within the lens area that meet the search criteria.

In addition to the use of lens, the topographic view may include color-coding or shading of specific regions within the topographic view for the purpose of highlighting specific time periods of interest, typically time periods that a user will frequently visit to access associated media files. Color-coding and shading of time periods of interest may be defined by the user based on user preferences. For example, a user may desire to highlight a time period that corresponds to the birth period of a child. In this regard, the user may highlight the area as blue or pink for the purpose of easily identifying this area when trying to locate specific media files.

In addition, the highlighted area may be permanent and recalled to the topographic view by a user whenever desired. Metadata information related to the highlighted areas is stored in the system and may be displayed and listed in a bookmark or annotation list.

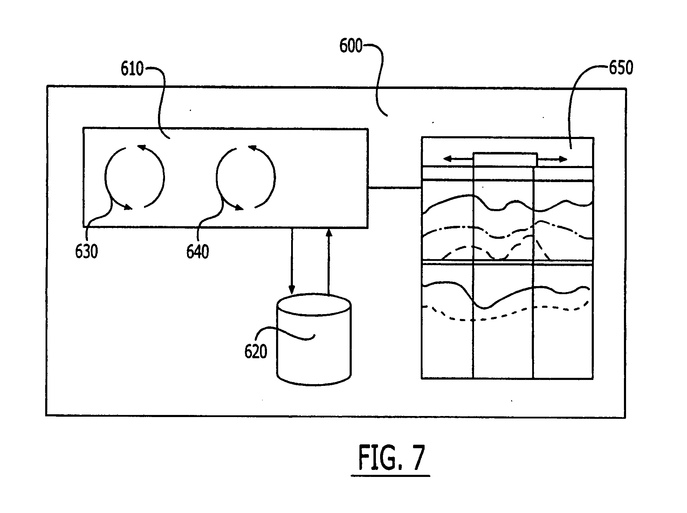

A further embodiment of the invention is defined by a digital device that implements the media diary, in accordance with an embodiment of the present invention. Figure 7 illustrates a block diagram of digital device **600** that implements the media diary and topographic view presentation. As previously noted, the digital device will typically be a digital device capable of digital communication with other digital devices, such as a mobile terminal including for example, a mobile telephone, a PDA, laptop computer or the like. However, the digital device may be any other device capable of displaying the media diary of the present invention such as a digital camera, digital video recorder, digital audio recorder or the like.

The digital device **600** will include a processing unit **610**, such as a processor, an application specific integrated circuit, analog and/or digital circuitry, or any other similar device that executes computer-readable program instructions for accessing media files. Wherein the program instructions and the media files are generally stored in memory device **620**. The computer-readable program instructions will include first instructions **630** for generating a time bar that is presented in a media diary view and segments periods of time into time units, and second instructions **640** for generating a topographic view that graphically represents media file quantity in relation to the time units presented in the time bar. The second instructions may also provide for generating a topographic view that distinguishes media files based on a chosen media file characteristic. In addition, the digital device will include, or may be in external communication with, a display **650** that is in communication with the processing unit and provides a presentation mechanism for the time bar in conjunction with the topographic view.

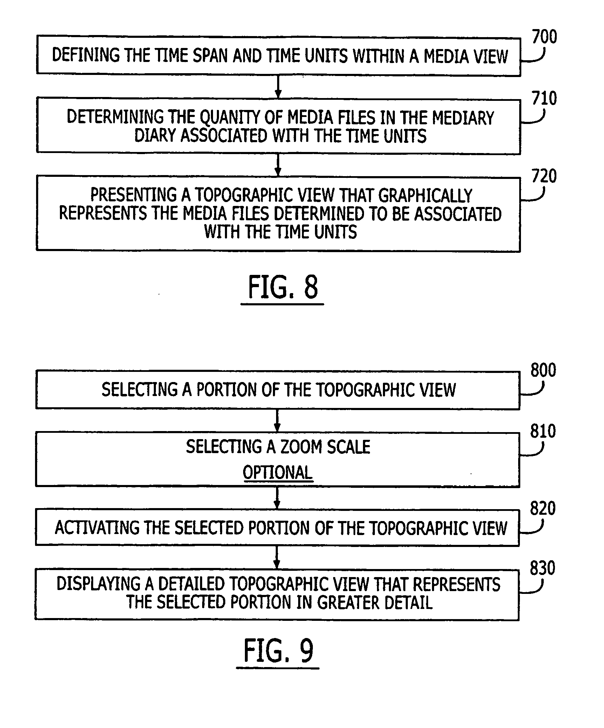

The present invention is also embodied in a method for representing media items in a topographic view within a media diary. Figure 8 provides a flow diagram of such a method, in accordance with an embodiment of the present invention. At step **700**, a time span and time units within the time span are defined. These may be defined by media diary configuration or by media diary user selection. At step **710**, a determination is made by the media diary as to the quantity of media files in the diary that are associated with the defined time units. At step **720**, a topographic view is presented that graphically represents the quantity of media files in the media diary application that are associated with the time units in the time bar.

In alternate embodiments the method may include the steps of defining a media file characteristic, determining the quantity of media files that include the media file characteristic, determining the quantity of media files having the characteristic that are associated with the defined time units and graphically representing in the topographic view quantity of media files, by media file characteristic, that are associated with the time units in the time bar. In this regard, the media files are not only presented in terms of their quantity associated by a time unit but are further distinguished based on media file characteristic, such as media file type or the like.

A further method is defined for providing a zoom function in a topographic view of a media diary. Figure 9 provides a flow diagram of such a method, in accordance with an embodiment of the present invention. At step **800**, a selection is made of a portion of a graphical representation in a first topographic view and, optionally at step **810**, a selection of a zoom scale is made. Selection of the zoom portion and selection of the zoom scale will typically be by the user of the media diary, however, it is also possible for diary itself to be configured to select the zoom portion and the zoom scale. In addition, the order of steps **800** and **810** may be reversed without affecting the overall zoom function. At step **820,** the selected portion of graphical representation is activated, typically by user interaction with a mouse-type input device or a keypad. At step **830**, a detailed second topographical view is displayed that represents the selected portion of the graphical representation of the first topographical view in more detail. The detailed second topographical view may provide detailed representations of the media files associated with the selected portion of the first topographic view and the detailed representations may be activated to provide access to the media files. Additionally, steps **800** and **830** may run concurrently, i.e., when moving a cursor or otherwise zooming-in on area on the topographic view, icons of the media files under the cursor or the zooming area may be dynamically displayed in another view.

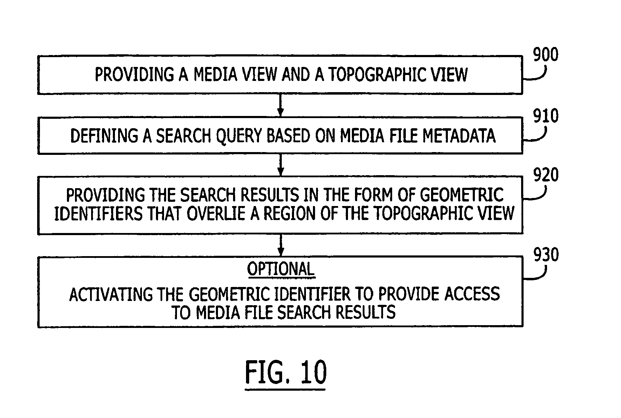

A further embodiment of the invention is defined by a method for searching for media files within a topographic view of a media diary. Figure 10 provides a flow diagram of such a method, in accordance with an embodiment of the present invention. At step **900**, a media view is provided that defines a time span and time units in conjunction with a first topographic view that graphically represents media files in the media diary by association with a time unit. At step **910**, a search query is defined that includes at least one item of media file metadata. At step **920**, the search results are provided for on the form of a geometric identifier in the topographic view that overlies a region of the topographic view that includes media files having the searched media file metadata. At optional step **930**, the geometric identifier is activated to provide access to one or more media files having the searched media file metadata.

The described embodiments of the present invention provide for a media diary application that provides for a topographic presentation or view of the quantity of media files associated with specific time periods. In addition, the topographic view provides the capability to distinguish between different media files based on a chosen media file characteristic. In the topographic presentation the quantity of media files are represented graphically, typically in a line graph or bar graph type presentation. As such, the topographic view of the media diary application provides the user of the diary an efficient means of locating media files and assessing quantity of media files in relation to time span.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method, comprising:
- defining a time span and time units within the time span (700);
- providing (900) a time bar view (100, 310, 410) on a display of a digital device (600) that encompasses said time span and segments said time span into said time units;
- determining (710) the quantity of media files in a media diary application on said digital device (600) that are associated with the defined time units;
- providing (720) a line graph (320), envelope curve, stacked area or bar graph type presentation view (300, 400) that graphically represents the quantity of media files in the media diary application that are associated with the time units in the time bar view (100, 310, 410);
- enabling a user of the digital device (600) to search media files based on metadata information connected to each media file by defining (910) a search query that includes at least one item of media file metadata; and
- presenting (920) search results as geometric shape (500) displayed over an area of the line graph (320), envelope curve, stacked area or bar graph type presentation view (300, 400), said area including media files having the searched media file metadata, and activating the geometric shape (500) to provide access to one or more media files having the searched media file metadata, wherein the size of the geometric shape (500) indicates the amount of media files that meet the search criteria.

2. The method of claim 1, further comprising:
- receiving a selection (800) of a portion of a graphical representation in a first line graph (320), envelope curve, stacked area or bar graph type presentation view (300, 400);
- activating (820) the selected portion of the graphical representation; and
- displaying (830) a detailed zoomed-in second line graph (320), envelope curve, stacked area or bar graph type presentation view (300, 400) that represents, in more detail, the selected portion of the graphical representation of the first line graph (320), envelope curve, stacked area or bar graph type presentation view (300, 400).

3. The method of claim 2, wherein the step of displaying (830) said detailed zoomed-in second line graph (320), envelope curve, stacked area or bar graph type presentation view (300, 400) further includes the step of providing detailed representations of the media files associated with the selected portion of the first line graph (320), envelope curve, stacked area or bar graph type presentation view (300, 400).

4. The method of claim 3, wherein the step of providing detailed representations of the media files associated with the selected portion of the first line graph (320), envelope curve, stacked area or bar graph type presentation view (300, 400) further includes activating (820) the detailed representations of the media files to access the media files.

5. The method of claim 4, furthering comprising the step of selecting (810) a zoom scale prior to activating (820) the selected portion of the graphical representation.

6. The method of claim 1, further including:
- activating the geometric shape (500) to provide the user of said digital device (600) access to one or more media files having the searched media file metadata.

7. The method of claim 6, wherein the step of activating the geometric shape (500) to provide access to the media files having the searched media file of interest further comprises the step of activating the geometric shape (500) to provide a detailed line graph (320), envelope curve, stacked area or bar graph type presentation view (300, 400) of the region that provides access to the one or more media files having the media file metadata.

8. Method of one of claims 1 to 7, wherein media file quantity is defined as the number of media files or the storage volume of media files.

9. Method of one of claims 1 to 8, wherein the time units are time units chosen from the group consisting of minutes, hours, days, weeks, months, years, decades and centuries.

10. Method of one of claims 1 to 9, further comprising generating a dividing line (330) for dividing the line graph (320), envelope curve, stacked area or bar graph type presentation view (300, 400) into more than one portion.

11. Method of claim 10, wherein the generating of the dividing line (330) is based on a chosen distinguishing media file characteristic.

12. An application for providing access to media files in a media diary application on a digital device (600), the application comprising a computer readable storage medium having computer-readable program instructions embodied in the medium, the computer-readable program instructions, when executed by a processing unit (610) of said digital device (600), performing a method according to one of claims 1 to 10.

13. A digital device (600), the device comprising:
- a processing unit (610); and
- a display in communication with the processing unit (610);
- the processing unit (610) being adapted for
- defining a time span and time units within the time span (700);
- providing (900) a time bar view (100, 310, 410) on said display that encompasses said time span and segments said time span into said time units;
- determining (710) the quantity of media files in a media diary application on said digital device (600) that are associated with the defined time units;
- providing (720) a line graph (320), envelope curve, stacked area or bar graph type presentation view that graphically represents the quantity of media files in the media diary application that are associated with the time units in the time bar view (100, 310, 410);
- enabling a user of the digital device (600) to search media files based on metadata information connected to each media file by defining (910) a search query that includes at least one item of media file metadata; and
- presenting (920) search results as geometric shape (500) displayed over an area of the line graph (320), envelope curve, stacked area or bar graph type presentation view, said area including media files having the searched media file metadata, wherein the size of the geometric shape (500) indicates the amount of media files that meet the search criteria.

## Patentansprüche

1. Verfahren, umfassend:
- Definieren einer Zeitspanne und von Zeiteinheiten innerhalb der Zeitspanne (700);
- Bereitstellen (900) einer Zeitleistenansicht (100, 310, 410) auf einer Anzeige einer digitalen Vorrichtung (600), welche die Zeitspanne umspannt und die Zeitspanne in die Zeiteinheiten segmentiert;
- Bestimmen (710) der Menge von Mediendateien in einer Medientagebuch-Anwendung auf der digitalen Vorrichtung (600), die mit den definierten Zeiteinheiten verknüpft sind;
- Bereitstellen (720) einer Präsentationsansicht (300, 400) von der Art eines Liniengraphen (320), einer Hüllkurve, eines Stapelfelddiagramms oder Balkendiagramms, die grafisch die Menge von Mediendateien in der Medientagebuch-Anwendung darstellt, die mit den Zeiteinheiten in der Zeitleistenansicht (100, 310, 410) verknüpft sind;
- einem Benutzer der digitalen Vorrichtung (600) zu ermöglichen, Mediendateien zu suchen, basierend auf Metadaten-Informationen, die mit jeder Mediendatei in Verbindung stehen, durch Definieren (910) einer Suchabfrage, die mindestens ein Element von Mediendatei-Metadaten einschließt; und
- Darstellen (920) von Suchergebnissen als geometrische Form (500), die über einem Bereich der Präsentationsansicht (300, 400) von der Art eines Liniengraphen (320), einer Hüllkurve, eines Stapelfelddiagramms oder Balkendiagramms angezeigt wird, wobei der Bereich Mediendateien einschließt, welche die gesuchten Mediendatei-Metadaten aufweisen, und Aktivieren der geometrischen Form (500), um einen Zugriff auf ein oder mehrere Mediendateien bereitzustellen, welche die gesuchten Mediendatei-Metadaten aufweisen, wobei die Größe der geometrischen Form (500) die Menge an Mediendateien angibt, welche die Suchkriterien erfüllen.

2. Verfahren nach Anspruch 1, weiter umfassend:
- Empfangen einer Auswahl (800) eines Abschnitts einer grafischen Darstellung in einer ersten Präsentationsansicht (300, 400) von der Art eines Liniengraphen (320), einer Hüllkurve, eines Stapelfelddiagramms oder Balkendiagramms;
- Aktivieren (820) des ausgewählten Abschnitts der grafischen Darstellung; und
- Anzeigen (830) einer detaillierten vergrößerten zweiten Präsentationsansicht (300, 400) von der Art eines Liniengraphen (320), einer Hüllkurve, eines Stapelfelddiagramms oder Balkendiagramms, die den ausgewählten Abschnitt der grafischen Darstellung der ersten Präsentationsansicht (300, 400) von der Art eines Liniengraphen (320), einer Hüllkurve, eines Stapelfelddiagramms oder Balkendiagramms detaillierter darstellt.

3. Verfahren nach Anspruch 2, wobei der Schritt des Anzeigens (830) der detaillierten, vergrößerten zweiten Präsentationsansicht (300, 400) von der Art eines Liniengraphen (320), einer Hüllkurve, eines Stapelfelddiagramms oder Balkendiagramms weiter den Schritt einschließt, detaillierte Darstellungen der Mediendateien bereitzustellen, die mit dem ausgewählten Abschnitt der ersten Präsentationsansicht (300, 400) von der Art eines Liniengraphen (320), einer Hüllkurve, eines Stapelfelddiagramms oder Balkendiagramms verknüpft sind.

4. Verfahren nach Anspruch 3, wobei der Schritt des Bereitstellens detaillierter Darstellungen der Mediendateien, die mit dem ausgewählten Abschnitt der ersten Präsentationsansicht (300, 400) von der Art eines Liniengraphen (320), einer Hüllkurve, eines Stapelfelddiagramms oder Balkendiagramms verknüpft sind, weiter ein Aktivieren (820) der detaillierten Darstellungen der Mediendateien einschließt, um auf die Mediendateien zuzugreifen.

5. Verfahren nach Anspruch 4, weiter umfassend den Schritt des Auswählens (810) einer Vergrößerungsstufe vor dem Aktivieren (820) des ausgewählten Abschnitts der grafischen Darstellung.

6. Verfahren nach Anspruch 1, weiter einschließend:
- Aktivieren der geometrischen Form (500), um dem Benutzer der digitalen Vorrichtung (600) einen Zugriff auf die ein oder mehreren Mediendateien mit den gesuchten Mediendatei-Metadaten bereitzustellen.

7. Verfahren nach Anspruch 6, wobei der Schritt des Aktivierens der geometrischen Form (500), um einen Zugriff auf die Mediendateien mit der gesuchten betreffenden Mediendatei bereitzustellen, weiter den Schritt des Aktivierens der geometrischen Form (500) umfasst, um eine detaillierte Präsentationsansicht (300, 400) von der Art eines Liniengraphen (320), einer Hüllkurve, eines Stapelfelddiagramms oder Balkendiagramms des Bereiches bereitzustellen, der den Zugriff zu den ein oder mehreren Mediendateien bereitstellt, welche die gesuchten Mediendatei-Metadaten aufweisen.

8. Verfahren nach einem der Ansprüche 1 bis 7, wobei die Menge von Mediendateien als die Anzahl von Mediendateien oder das Speichervolumen von Mediendateien definiert ist.

9. Verfahren nach einem der Ansprüche 1 bis 8, wobei die Zeiteinheiten Zeiteinheiten sind, die ausgewählt sind aus der Gruppe bestehend aus Minuten, Stunden, Tagen, Wochen, Monaten, Jahren, Jahrzehnten oder Jahrhunderten.

10. Verfahren nach einem der Ansprüche 1 bis 9, weiter umfassend Erzeugen einer Teilungslinie (330) zum Teilen der Präsentationsansicht (300, 400) von der Art eines Liniengraphen (320), einer Hüllkurve, eines Stapelfelddiagramms oder Balkendiagramms in mehr als einen Abschnitt.

11. Verfahren nach Anspruch 10, wobei das Erzeugen der Teilungslinie (330) auf einer ausgewählten, charakteristischen Mediendatei-Eigenschaft basiert.

12. Anwendung zum Bereitstellen eines Zugriffs auf Mediendateien in einer Medientagebuch-Anwendung auf einer digitalen Vorrichtung (600), wobei die Anwendung ein computerlesbares Speichermedium umfasst, wobei auf dem Medium computerlesbare Anweisungen gespeichert sind, wobei die computerlesbaren Anweisungen, wenn sie durch eine Verarbeitungseinheit (610) der digitalen Vorrichtung (600) ausgeführt werden, ein Verfahren nach einem der Ansprüche 1 bis 10 ausführen.

13. Digitale Vorrichtung (600), wobei die Vorrichtung umfasst:
- eine Verarbeitungseinheit (610); und
- eine Anzeige in Verbindung mit der Verarbeitungseinheit (610);
- wobei die Verarbeitungseinheit (610) eingerichtet ist zum
- Definieren einer Zeitspanne und von Zeiteinheiten innerhalb der Zeitspanne (700);
- Bereitstellen (900) einer Zeitleistenansicht (100, 310, 410) auf der Anzeige, welche die Zeitspanne umspannt und die Zeitspanne in die Zeiteinheiten segmentiert;
- Bestimmen (710) der Menge von Mediendateien in einer Medientagebuch-Anwendung auf der digitalen Vorrichtung (600), die mit den definierten Zeiteinheiten verknüpft sind;
- Bereitstellen (720) einer Präsentationsansicht von der Art eines Liniengraphen (320), einer Hüllkurve, eines Stapelfelddiagramms oder Balkendiagramms, die grafisch die Menge von Mediendateien in der Medientagebuch-Anwendung darstellt, die mit den Zeiteinheiten in der Zeitleistenansicht (100, 310, 410) verknüpft sind;
- einem Benutzer der digitalen Vorrichtung (600) zu ermöglichen, Mediendateien zu suchen, basierend auf Metadaten-Informationen, die mit jeder Mediendatei in Verbindung stehen, durch Definieren (910) einer Suchabfrage, die mindestens ein Element von Mediendatei-Metadaten einschließt; und
- Darstellen (920) von Suchergebnissen als geometrische Form (500), die über einem Bereich der Präsentationsansicht von der Art eines Liniengraphen (320), einer Hüllkurve, eines Stapelfelddiagramms oder Balkendiagramms angezeigt wird, wobei der Bereich Mediendateien einschließt, welche die gesuchten Mediendatei-Metadaten aufweisen, wobei die Größe der geometrischen Form (500) die Menge an Mediendateien angibt, welche die Suchkriterien erfüllen.

## Revendications

1. Procédé, comportant les étapes ci-dessous consistant à :
- définir un laps de temps et des unités de temps au sein du laps de temps (700) ;
- fournir (900) un affichage sous forme de barre des temps (100, 310, 410) sur un affichage d'un dispositif numérique (600) qui englobe ledit laps de temps et segmente ledit laps de temps en lesdites unités de temps ;
- déterminer (710) la quantité de fichiers multimédias dans une application d'agenda multimédia sur ledit dispositif numérique (600) qui sont associés aux unités de temps définies ;
- fournir (720) un affichage de présentation du type graphique linéaire (320), courbe enveloppe, zone empilée ou diagramme à barres (300, 400) qui représente graphiquement la quantité de fichiers multimédias, dans l'application d'agenda multimédia, qui sont associés aux unités de temps dans l'affichage sous forme de barre des temps (100, 310, 410) ;
- permettre à un utilisateur du dispositif numérique (600) de rechercher dans les fichiers multimédias sur la base d'informations de métadonnées liées à chaque fichier multimédia en définissant (910) une requête de recherche qui comprend au moins un élément de métadonnées de fichiers multimédias ; et
- présenter (920) les résultats de recherche sous une forme géométrique (500) affichée sur une zone de l'affichage de présentation du type graphique linéaire (320), courbe enveloppe, zone empilée ou diagramme à barres (300, 400), ladite zone comportant des fichiers multimédias présentant les métadonnées de fichiers multimédias recherchées, et activer la forme géométrique (500) pour fournir un accès à un ou plusieurs fichiers multimédias présentant les métadonnées de fichiers multimédias recherchées, dans lequel la taille de la forme géométrique (500) indique la quantité de fichiers multimédias répondant aux critères de recherche.

2. Procédé selon la revendication 1, comportant en outre les étapes ci-dessous consistant à :
- recevoir une sélection (800) d'une partie d'une représentation graphique dans un premier affichage de présentation du type graphique linéaire (320), courbe enveloppe, zone empilée ou diagramme à barres (300, 400) ;
- activer (820) la partie sélectionnée de la représentation graphique ; et
- afficher (830) un second affichage de présentation détaillé et agrandi du type graphique linéaire (320), courbe enveloppe, zone empilée ou diagramme à barres (300, 400), qui représente, de façon plus détaillée, la partie sélectionnée de la représentation graphique du premier affichage de présentation du type graphique linéaire (320), courbe enveloppe, zone empilée ou diagramme à barres (300, 400).

3. Procédé selon la revendication 2, dans lequel l'étape consistant à afficher (830) ledit second affichage de présentation détaillé et agrandi du type graphique linéaire (320), courbe enveloppe, zone empilée ou diagramme à barres (300, 400) comprend en outre l'étape consistant à fournir des représentations détaillées des fichiers multimédias associés à la partie sélectionnée du premier affichage de présentation du type graphique linéaire (320), courbe enveloppe, zone empilée ou diagramme à barres (300, 400).

4. Procédé selon la revendication 3, dans lequel l'étape consistant à fournir des représentations détaillées des fichiers multimédias associés à la partie sélectionnée du premier affichage de présentation du type graphique linéaire (320), courbe enveloppe, zone empilée ou diagramme à barres (300, 400) comprend en outre l'étape consistant à activer (820) les représentations détaillées des fichiers multimédias en vue d'accéder aux fichiers multimédias.

5. Procédé selon la revendication 4, comportant en outre l'étape consistant à sélectionner (810) une échelle d'agrandissement avant d'activer (820) la partie sélectionnée de la représentation graphique.

6. Procédé selon la revendication 1, comportant en outre l'étape consistant à :
- activer la forme géométrique (500) en vue de fournir à l'utilisateur dudit dispositif numérique (600) un accès à un ou plusieurs fichiers multimédias présentant les métadonnées de fichiers multimédias recherchées.

7. Procédé selon la revendication 6, dans lequel l'étape consistant à activer la forme géométrique (500) en vue de fournir un accès aux fichiers multimédias présentant les métadonnées de fichiers multimédias recherchées pertinentes comprend en outre l'étape consistant à activer la forme géométrique (500) en vue de fournir un affichage de présentation détaillé du type graphique linéaire (320), courbe enveloppe, zone empilée ou diagramme à barres (300, 400) de la région qui délivre un accès à un ou plusieurs fichiers multimédias présentant les métadonnées de fichiers multimédias.

8. Procédé selon l'une quelconque des revendications 1 à 7, dans lequel la quantité de fichiers multimédias est définie comme étant le nombre de fichiers multimédias ou le volume de stockage de fichiers multimédias.

9. Procédé selon l'une quelconque des revendications 1 à 8, dans lequel les unités de temps sont des unités de temps choisies à partir du groupe constitué des éléments ci-après : minutes, heures, jours, semaines, mois, années, décennies et siècles.

10. Procédé selon l'une quelconque des revendications 1 à 9, comportant en outre l'étape consistant à générer une ligne de division (330) pour diviser l'affichage de présentation du type graphique linéaire (320), courbe enveloppe, zone empilée ou diagramme à barres (300, 400) en plus qu'une partie.

11. Procédé selon la revendication 10, dans lequel l'étape de génération de la ligne de division (330) est basée sur une caractéristique de distinction de fichiers multimédias choisie.

12. Application destinée à fournir un accès à des fichiers multimédias dans une application d'agenda multimédia sur un dispositif numérique (600), l'application comportant un support de stockage lisible par un ordinateur présentant des instructions de programme lisibles par un ordinateur intégrées dans le support, les instructions de programme lisibles par un ordinateur, lorsqu'elles sont exécutées par une unité de traitement (610) dudit dispositif numérique (600), mettant en oeuvre un procédé selon l'une quelconque des revendications 1 à 10.

13. Dispositif numérique (600), dans lequel le dispositif comporte :
- une unité de traitement (610) ; et
- un affichage en communication avec l'unité de traitement (610) ;
- l'unité de traitement (610) étant apte à :
- définir un laps de temps et des unités de temps au sein du laps de temps (700) ;
- fournir (900) un affichage sous forme de barre des temps (100, 310, 410), sur ledit affichage, lequel englobe ledit laps de temps et segmente ledit laps de temps en lesdites unités de temps ;
- déterminer (710) la quantité de fichiers multimédias dans une application d'agenda multimédia sur ledit dispositif numérique (600) qui sont associés aux unités de temps définies ;
- fournir (720) un affichage de présentation du type graphique linéaire (320), courbe enveloppe, zone empilée ou diagramme à barres qui représente graphiquement la quantité de fichiers multimédias dans l'application d'agenda multimédia qui sont associés aux unités de temps dans l'affichage sous forme de barre des temps (100, 310, 410) ;
- permettre à un utilisateur du dispositif numérique (600) de rechercher dans les fichiers multimédias sur la base d'informations de métadonnées liées à chaque fichier multimédia en définissant (910) une requête de recherche qui comprend au moins un élément de métadonnées de fichiers multimédias ; et
- présenter (920) les résultats de recherche sous une forme géométrique (500) affichée sur une zone de l'affichage de présentation du type graphique linéaire (320), courbe enveloppe, zone empilée ou diagramme à barres, ladite zone comportant des fichiers multimédias présentant les métadonnées de fichiers multimédias recherchées, dans lequel la taille de la forme géométrique (500) indique la quantité de fichiers multimédias répondant aux critères de recherche.
